# EUROPÄISCHE PATENTSCHRIFT

(11) **EP 1 714 048 B1**
(45) Veröffentlichungstag und Bekanntmachung des Hinweises auf die Patenterteilung: **09.01.2008**
(21) Anmeldenummer: 05707986.5
(22) Anmeldetag: 09.02.2005
(51) Int. Cl.: F16D 65/14

(54) **HYDRAULISCHE FAHRZEUGBREMSE**
HYDRAULIC VEHICLE-BRAKE
FREIN DE VEHICULE HYDRAULIQUE

(30) Priorität: 09.02.2004 DE 102004006436; 11.10.2004 DE 102004049656; 27.12.2004 DE 102004062810
(43) Veröffentlichungstag der Anmeldung: 25.10.2006
(73) Patentinhaber: Continental Teves AG & Co. oHG, 60488 Frankfurt am Main (DE)
(72) Erfinder: KNOP, Volker, 56766 Ulmen (DE); WINKLER, Thomas, 55122 Mainz (DE); BALZ, Jürgen, 65510 Hünstetten-Oberlibbach (DE); VÖLKEL, Jürgen, 60486 Frankfurt am Main (DE); SCHIEL, Lothar, 65719 Hofheim (DE); PEICHL, Thomas, Wöllstadt, 61206 (DE)
(86) Internationale Anmeldenummer: PCT/EP2005/050574
(87) Internationale Veröffentlichungsnummer: WO 2005/075848

(56) Entgegenhaltungen:
- DE-A- 10 320 800
- US-A- 3 983 975

## Beschreibung

Die Erfindung betrifft eine hydraulische Fahrzeugbremse, insbesondere für Kraftfahrzeuge, mit einem Bremsgehäuse, in dem ein hydraulischer Betriebsdruckraum von einem Bremskolben begrenzt ist, wobei der Bremskolben im zugespannten Zustand mittels einer Verriegelungsvorrichtung verriegelbar ist, deren Verriegelung durch eine Relativbewegung eines Kraftübertragungselements ermöglicht wird, wobei ein mit dem Bremskolben zusammenwirkender Arbeitsspeicher vorgesehen ist, der durch einen absperrbaren Speicherdruckraum, einen den Speicherdruckraum begrenzenden Speicherkolben und mindestens ein sich am Speicherkolben abstützendes Felderelement gebildet ist.

Eine derartige hydraulische Fahrzeugbremse ist aus der DE 10 320 800 A1 oder der WO 2004/027282 A1 bekannt und dort insbesondere anhand der Fig. 3a und 3b beschrieben. Bei der aus WO 2004/027 282 A1 vorbekannten hydraulischen Fahrzeugbremse ist vorgesehen, dass die Feststellbremsvorrichtung durch einen im Betriebsdruckraum eingesteuerten hydraulischen Druck betätigbar ist, sowie dass der Arbeitsspeicher durch den hydraulischen Druck ladbar ist. Bei der anhand der Fig. 3a und 3b beschriebenen Ausführungsform ist ein mit einem Ventil schaltbarer Speicherdruckraum vorgesehen, der somit ein schaltbares, hydraulisch vorspannbares Federelement aufweist. Bei dieser Ausführungsform wird die Spindel der als Gewindemutter-Spindel-Kombination ausgeführten Verriegelungsvorrichtung zur Durchführung eines Feststellbremsvorganges blockiert, wodurch der Bremskolben verriegelt ist. Dazu ist ein Schrittschaltmechanismus vorgesehen, der mit dem Speicherkolben zusammenwirkt und Relativbewegungen unterschiedlicher Länge auf den Bremskolben hin zulässt. Bei einer Leckage des den Speicherdruckraum schaltenden Ventils, ist eine ungewollte Verrieglung des Bremskolbens während einer Betriebsbremsung denkbar. Dies führt zu einem ungewollten Blockieren des zugeordneten Rades, was als weniger vorteilhaft anzusehen ist.

Es ist daher Aufgabe der Erfindung, eine hydraulische Fahrzeugbremse mit Feststellbremsvorrichtung der eingangs genannten Gattung dahingehend zu verbessern, dass eine mögliche Leckage des den Speicherdruckraum schaltenden Ventils nicht zu einer ungewollten Aktivierung der Feststellbremsfunktion führt und so die Verkehrssicherheit erhöht.

Diese Aufgabe wird erfindungsgemäß dadurch gelöst, dass das Kraftübertragungselement vom Speicherkolben in einer der Zuspannrichtung des Bremskolbens entgegengesetzten Richtung mitnehmbar ist und von einem elektromagnetischen oder einem elektromechanischen Aktuator arretierbar ist, sodass eine Relativbewegung zwischen dem Kraftübertragungselement und dem Speicherkolben ermöglicht wird.

Bei einer vorteilhaften Ausführungsform der Erfindung ist im Speicherkolben eine Stufenbohrung vorgesehen, die das Kraftübertragungselement aufnimmt.

Eine vorteilhafte Weiterbildung des Erfindungsgegenstandes sieht vor, dass das Kraftübertragungselement einen axialen Kragen aufweist, der sich am Übergang der unterschiedlichen Durchmesser der Stufenbohrung abstützt.

Bei einer besonders vorteilhaften Ausführungsform der Erfindung ist die Verriegelungsvorrichtung durch eine Gewindemutter-Spindel-Anordnung gebildet, deren Gewindemutter sich am Bremskolben abstützt oder mit dem Bremskolben einstückig ausgebildet ist, während die Spindel mit einer ersten Reibfläche versehen ist, die im verriegelten Zustand mit einer am Speicherkolben verdrehgesichert angeordneten zweiten Reibfläche zusammenwirkt.

Dabei ist vorgesehen, dass das Kraftübertragungselement ein Zentrallager für die Spindel bildet.

Bei einer vorteilhaften Weiterbildung des Erfindungsgegenstandes ist ein weiteres Federelement vorgesehen, das den Kragen des Kraftübertragungselements zur Anlage am Übergang der unterschiedlichen Durchmesser der Stufenbohrung bringt.

Eine weitere vorteilhafte Ausführung der Erfindung besteht darin, dass der elektromagnetische Aktuator mit einer Ankerplatte zusammenwirkt, die mit dem Kraftübertragungselement in kraftübertragender Verbindung steht.

Die Spule des elektromagnetischen Aktuators übt die Funktion eines Sensors zur Erfassung der Position der Ankerplatte aus.

Bei einer alternativen Ausführungsform ist vorgesehen, dass der elektromechanische Aktuator die Funktion eines Sensors zur Erfassung der Position des Kraftübertragungselements ausübt. Bei dieser Ausführungsform ist das Kraftübertragungselement über ein vorzugsweise selbsthemmendes Gewinde mit dem Speicherkolben verbunden. Außerdem übt der elektromechanische Aktuator über ein vorzugsweise selbsthemmendes Gewinde und eine adaptive Verbindung eine von seiner Position unabhängige Relativbewegung zwischen dem Speicherkolben und dem Kraftübertragungselement aus.

Es ist vorgesehen, dass der hydraulische Speicherdruckraum mittels eines elektrisch schaltbaren Ventils absperrbar ist.

Eine andere besonders vorteilhafte Ausführungsvariante des Erfindungsgegenstandes sieht vor, dass der Druckaufbau sowohl im Betriebsdruckraum als auch im hydraulischen Druckraum bzw. Speicherdruckraum mittels einer hydraulischen Pumpe erfolgt, die beispielsweise als Fremddruckquelle eines elektrohydraulischen Bremssystems dient.

Alternativ erfolgt der Druckaufbau sowohl im Betriebsdruckraum als auch im Speicherdruckraum mittels eines durch den Fahrzeugführer betätigbaren Druckerzeugers.

Die Erfindung wird nachfolgend anhand von zwei Ausführungsbeispielen im Zusammenhang mit der beiliegenden Zeichnung näher erläutert. In der Zeichnung zeigen:
- Fig. 1: eine axiale Schnittdarstellung einer ersten Ausführung der erfindungsgemäßen hydraulischen Fahrzeugbremse in gelöstem Zustand,
- Fig. 2: eine zweite Ausführung der erfindungsgemäßen hydraulischen Fahrzeugbremse im Axialschnitt.

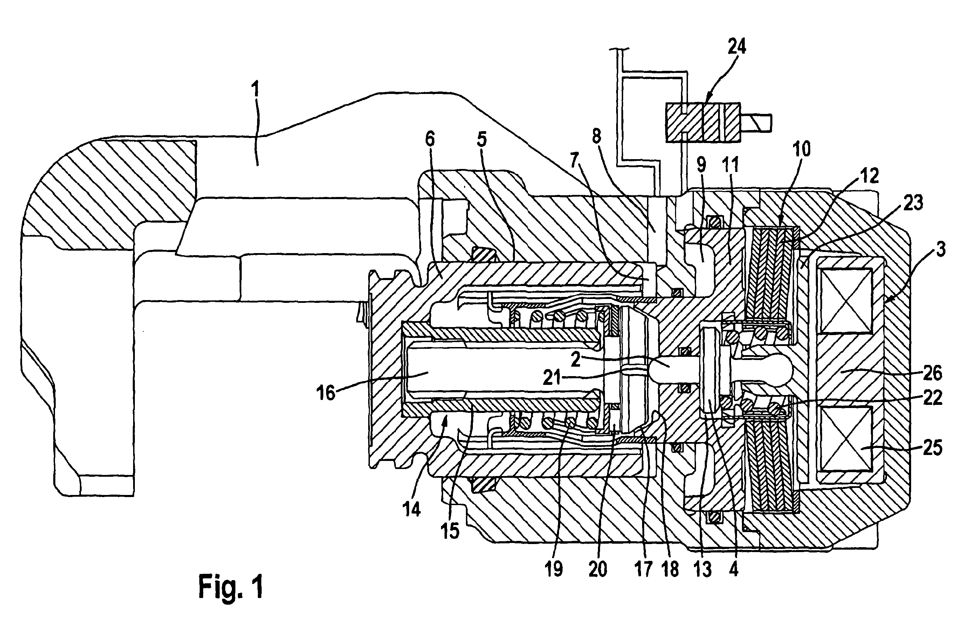

Die in Fig. 1 dargestellte erste Ausführung der erfindungsgemäßen hydraulischen Fahrzeugbremse weist ein Bremsgehäuse 1 auf, welches den äußeren Rand einer nicht dargestellten Bremsscheibe und zwei ebenfalls nicht dargestellte Bremsbeläge umgreift. Das Bremsgehäuse 1 bildet auf seiner Innenseite einen Bremszylinder 5, der einen Bremskolben 6 axial verschiebbar aufnimmt. In den zwischen Bremszylinder 5 und Bremskolben 6 gebildeten Betriebsdruckraum 7 kann mittels eines hydraulischen Anschlusses 8 Bremsflüssigkeit zugeführt werden, so dass sich ein Bremsdruck aufbaut, der den Bremskolben 6 axial zur Bremsscheibe hin verschiebt. Dadurch wird der dem Bremskolben 6 zugewandte Bremsbelag gegen die Bremsscheibe gedrückt, wobei als Reaktion das Bremsgehäuse 1 sich in der entgegengesetzten Richtung verschiebt und dadurch auch den anderen Bremsbelag gegen die Bremsscheibe drückt.

Wie Fig. 1 außerdem zu entnehmen ist, ist ein Arbeitsspeicher 10 an der dem Bremskolben 6 abgewandten Seite des Bremsgehäuses 1 angeordnet. Der Arbeitsspeicher 10 besteht im wesentlichen aus einem hydraulischen Speicherdruckraum 9, einem den Speicherdruckraum 9 begrenzenden Speicherkolben 11 sowie einem Federelement 12, das im gezeigten Beispiel als ein Paket von Tellerfedern ausgeführt ist und sich am Speicherkolben 11 abstützt. Die im Arbeitsspeicher 10 gespeicherte Energie wirkt während eines Feststellbremsvorganges auf den Bremskolben 6, wie nachfolgend noch näher erläutert wird. Dadurch wird erreicht, dass die auf die Bremsbeläge einwirkende Zuspannkraft von thermisch bedingten Längenänderungen im Bereich des Bremsgehäuses 1 nahezu unabhängig ist.

Eine Verriegelungsvorrichtung, die zur Realisierung einer Feststellbremsfunktion erforderlich ist, ist bei der in Fig. 1 dargestellten Ausführung durch ein Spindelgetriebe bzw. eine Gewindemutter-Spindel-Anordnung 14 gebildet. Die erwähnte Gewindemutter-Spindel-Anordnung 14 besteht aus einer Gewindemutter 15 sowie einer Spindel 16, die mittels eines nicht selbsthemmenden Gewindes miteinander in Verbindung stehen. Dabei ist die Gewindemutter 15 mit dem Bremskolben 6 starr verbunden, während die Spindel 16 an ihrem dem Bremskolben 6 abgewandten Ende eine vorzugsweise konische erste Reibfläche 17 aufweist, die mit einer im Speicherkolben 11 verdrehgesichert angeordneten zweiten Reibfläche 18 in- und außer Eingriff bringbar ist. Zu diesem Zweck ist ein Kraftübertragungselement 2 vorgesehen, das von einer zylindrischen Stufenbohrung 13 im Speicherkolben 11 aufgenommen wird und durch ihn hindurchragt und ein Zentrallager 21 für die Spindel 16 bildet. Nach einer Relativbewegung des Kraftübertragungselementes 2 gegenüber dem Speicherkolben 11 wird die Funktion des Zentrallagers 21 aufgehoben und die beiden Reibflächen 17, 18 stehen miteinander in Eingriff, wie nachfolgend noch näher erläutert wird. Außerdem spannt eine sich am Bremsgehäuse 1 abstützende Feder 19 unter Zwischenschaltung eines Axiallagers 20 die Spindel 16 in Richtung auf die zweite Reibfläche 18 bzw. auf das Zentrallager 21 vor.

Die erste Ausführung der erfindungsgemäßen hydraulischen Fahrzeugbremse ist in Fig. 1 in gelöstem Zustand der Feststellbremse dargestellt. Zur Verriegelung der Feststellbremse wird durch einen nicht näher bestimmten Druckerzeuger zunächst sowohl im Betriebsdruckraum 7 als auch im Speicherdruckraum 9 ein hydraulischer Druck aufgebaut. Dazu muss ein elektrisch schaltbares Ventil, das vorzugsweise als ein stromlos geschlossenes (SG-) Ventil 24 ausgebildet ist, in seine offene Schaltstellung gebracht werden. Als Reaktion auf den Druckaufbau im Betriebsdruckraum 7 verschiebt sich der Bremskolben 6 in der Zeichnung nach links, während der Speicherkolben 11 in der Zeichnung nach rechts entgegen der Kraftwirkung des vorgespannten Federelements 12 verschoben wird. Bei diesem Vorgang wird das Federelement 12 komprimiert. Der Speicherkolben 11 nimmt dabei das Kraftübertragungselement 2 mit, indem sich ein am Kraftübertragungselement 2 ausgebildeter Kragen 4 am Übergang zwischen kleinerem und größerem Durchmesser der Stufenbohrung 13 abstützt. Der Speicherkolben 11 und damit das Kraftübertragungselement 2 werden durch den eben erwähnten Druckaufbau im Speicherdruckraum 9 in Fig. 1 nach rechts verschoben bis eine mit dem Kraftübertragungselement 2 in kraftübertragender Verbindung stehende Ankerplatte 23 an einem elektromagnetischen Aktuator 3 zur Anlage kommt. Bei diesem Vorgang liegt die Spindel 16 aufgrund der Kraftwirkung der Feder 19 weiterhin am Zentrallager 21 an, wodurch die beiden Reibflächen 17, 18 nicht in Eingriff treten können.

Anschließend wird der elektromagnetische Aktuator 3 bestromt, wodurch die Ankerplatte 23 in ihrer eben beschriebenen Anschlagposition vom elektromagnetischer Aktuator 3 arretiert wird. Bei einem anschließenden Druckabbau im Betriebsdruckraum 7 und im Speicherdruckraum 9 bewegt sich der Bremskolben 6 in der Zeichnung nach rechts während sich der Speicherkolben 11 nach links bewegt. Durch die Arretierung des Kraftübertragungselementes 2 wird eine Relativbewegung zwischen dem Kraftübertragungselement 2 und dem Speicherkolben 11 ermöglicht, wodurch die Funktion des Zentrallagers 21 für die Spindel 16 aufgehoben wird und die beiden Reibflächen 17, 18 miteinander in Eingriff gebracht werden. Das bereits erwähnte, vorgespannte Federelement 12 drückt den Speicherkolben 11, die aufgrund der in Eingriff gebrachten Reibflächen 17, 18 blockierte Spindel 16, die Gewindemutter 15 und damit den Bremskolben 6 in der Zeichnung nach links bzw. gegen die nicht dargestellte Bremsscheibe. Dadurch ist die Fahrzeugbremse in ihrem zugespannten Zustand verriegelt. Anschließend wird der elektromagnetische Aktuator 3 nicht mehr bestromt und die Ankerplatte 23 bzw. das Kraftübertragungselement 2 sind nicht mehr arretiert. Das Ventil 24 ist stromlos geschaltet und damit geschlossen. Die hydraulische Fahrzeugbremse benötigt also keine Energie und keinen hydraulischen Druck um die Verriegelung im zugespannten Zustand aufrecht zu erhalten, was als vorteilhaft anzusehen ist.

Zum Lösen der Verriegelung wird wiederum ein hydraulischer Druck im Betriebsdruckraum 7 sowie nach einer entsprechenden Ansteuerung des SG-Ventils 24 auch im Speicherdruckraum 9 ein hydraulischer Druck aufgebaut. Der hydraulische Druck würde wiederum den Bremskolben 6 in Fig. 1 nach links und den Speicherkolben 11 nach rechts verschieben. Allerdings ist es zur Entriegelung der Feststellbremse ausreichend, wenn der Speicherkolben 11 entlastet wird. Ein weiteres Federelement 22, welches das Kraftübertragungselement 2 zur Anlage am Übergang zwischen kleinerem und größerem Durchmesser der Stufenbohrung 13 bringt, drückt das Kraftübertragungselement 2 in Richtung der Spindel 16 und stößt die in Eingriff stehenden Reibflächen 17, 18 bei entsprechender Entlastung des Speicherkolbens 11 auf. Das Kraftübertragungselement 2 bildet anschließend wieder ein Zentrallager 21 für die Spindel 16.

Wie Fig. 1 zu entnehmen ist, sorgt das eben erwähnte weitere Federelement 22 darüber hinaus dafür, dass bei einer Betriebsbremsung, bei der nur der Betriebsdruckraum 7 mit Druck beaufschlagt wird, das Kraftübertragungselement 2 nicht verschoben wird, da es durch das weitere Federelement 22 entgegen der Kraftwirkung des hydraulischen Drucks im Betriebsdruckraum 7 vorgespannt ist. Der Speicherkolben 11 wird bei einer Betriebsbremsung ebenfalls nicht verschoben, da der dem Betriebsdruckraum 7 zugewandte Wirkdurchmesser des Speicherkolbens 11 kleiner ist als der Wirkdurchmesser des Bremskolbens 6. Außerdem wirkt das mit einer konstruktiv festgelegten Vorspannkraft ausgebildete Federelement 12 entgegen der Druckbeaufschlagung im Betriebsdruckraum 7, was eine Verschiebung des Speicherkolbens 11 während einer Betriebsbremsung ebenfalls verhindert.

Die Spule 25 des elektromagnetischen Aktuators 3 erfüllt die Funktion eines Sensors zur Erfassung der Position der Ankerplatte 23, bei der erkennbar ist, ob die Verriegelung der Fahrzeugbremse möglich ist oder nicht. Außerdem ist insbesondere das Anschlagen der Ankerplatte 23 am elektromagnetischen Aktuator 3 ein Signal für den nicht näher bestimmten Druckerzeuger, den Druckaufbau zur Durchführung eines Feststellbremsvorganges in den Druckräumen 7, 9 zu beenden. Um die Ankerplattenposition zuverlässig zu ermitteln, wird die durch die Ankerplattenbewegungen verursachte Induktivitätsänderung der Spule 25 des elektromagnetischen Aktuators 3 bestimmt. Dies geschieht, indem an die Spule 25 Spannungsimpulse angelegt werden. Gleichzeitig wird der Verlauf des durch die Spule 25 fließenden Stroms ermittelt. Dieser Stromverlauf lässt auf die Position der Ankerplatte 23 und damit auf die Position des Kraftübertragungselements 2 schließen. Verändert sich die Position der Ankerplatte 23, so ändert sich auch der Verlauf des durch die Spule 25 fließenden Stroms. Die Induktivitätsänderung der Spule 25 ist vor allem von der Größe des Spaltes zwischen der Ankerplatte 23 und dem Eisenjoch 26 des elektromagnetischen Aktuators 3 abhängig.

Natürlich ist es ebenso denkbar, ein Sensorelement zur Erfassung der Ankerplattenposition bzw. zur Bestimmung der Position des Kraftübertragungselementes 2 zu verwenden. Dieses Sensorelement kann als Hallsensor oder als magnetoresistives Sensorelement ausgeführt werden, die eine berührungslose Sensierung ermöglichen.

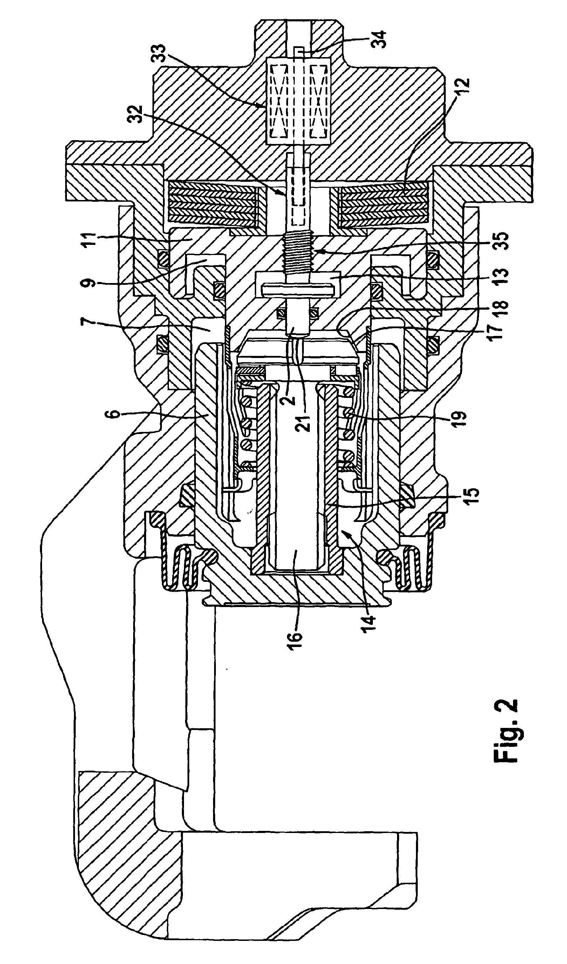

Das in Fig. 2 dargestellte, zweite Ausführungsbeispiel der erfindungsgemäßen Fahrzeugbremse unterscheidet sich von dem anhand von Fig. 1 beschriebenen Ausführungsbeispiel im wesentlichen durch die Verwendung eines elektromechanischen Aktuators 33 anstelle des elektromagnetischen Aktuators 3 zur Arretierung des Kraftübertragungselements 2.

Wie aus Fig. 2 ersichtlich ist, treibt der elektromechanische Aktuator 33 eine Antriebswelle 34 an, die mit dem nicht dargestellten Rotor des elektromechanischen Aktuators 33 verbunden ist. Die Antriebswelle 34 wiederum ist mit dem Kraftübertragungselement 2 verbunden und treibt es an. Allerdings ist die Verbindung zwischen der Antriebswelle 34 und dem Kraftübertragungselement 2 als eine adaptive Verbindung 32 ausgebildet, sodass eine Relativbewegung zwischen den eben genannten Bauteilen möglich ist.

Das Kraftübertragungselement 2 ist über ein selbsthemmendes Gewinde 35 mit dem Speicherkolben 11 verbunden und bildet wie beim bereits beschriebenen, ersten Ausführungsbeispiel die Funktion eines Zentrallagers 21 für die Spindel 16. Wenn das Kraftübertragungselement 2 vom elektromechanischen Aktuator 33 in der Zeichnung nach rechts gedreht wird, werden die an der Spindel 16 ausgebildete, erste Reibfläche 17 und die am Speicherkolben drehfest ausgebildete, zweite Reibfläche 18 miteinander in Eingriff gebracht.

Die Verriegelung des in Fig. 2 dargestellten Ausführungsbeispiels erfolgt ebenfalls nach einem Druckaufbau im Betriebsdruckraum 7 und im Speicherdruckraum 9, wonach einerseits der Bremskolben 6 in der Zeichnung nach links in Richtung der nicht dargestellten Bremsscheibe verschoben wird und der Speicherkolben 11 in der Zeichnung nach rechts verschoben wird. Aufgrund der Verbindung zwischen dem Speicherkolben 11 und dem Kraftübertragungselement 2 in Form des eben beschriebenen selbsthemmenden Gewindes 35 wird das Kraftübertragungselement 2 vom Speicherkolben 11 mitgenommen und in der Zeichnung nach rechts verschoben. Bei diesem Vorgang vollziehen die Antriebswelle 34 und das Kraftübertragungselement 2 eine Relativbewegung an der bereits beschriebenen Verbindung 32 der beiden Bauteile. Außerdem liegt die Spindel 16 bei diesem Vorgang durch die bereits beschriebene Kraftwirkung der Feder 19 weiterhin an dem Kraftübertragungselement 2 an und die Reibflächen 17, 18 stehen nicht miteinander in Eingriff. Die beiden Reibflächen 17, 18 werden erst miteinander in Eingriff gebracht, nachdem der elektromechanische Aktuator 33 entsprechend angesteuert wird und das Kraftübertragungselement 2 durch die Drehbewegung der Antriebswelle 34 in der Zeichnung nach rechts bewegt. Anschließend ist die Spindel 16 blockiert und der in die Druckräume 7, 9 eingesteuerte Druck wird abgebaut. Das bereits beschriebene Federpaket 12 wirkt nun über den Speicherkolben 11, die miteinander in Eingriff stehenden Reibflächen 17, 18, die Gewindemutter-Spindel-Anordnung 14 auf den Bremskolben 6, der somit im zugespannten Zustand verriegelt ist.

Zum Lösen der Verriegelung wird wiederum in beiden Druckräumen 7, 9 ein hydraulischer Druck aufgebaut bis der Speicherkolben 11 entlastet ist und der elektromechanische Aktuator 33 stark genug ist, die miteinander in Eingriff stehenden Reibflächen 17, 18 durch das Kraftübertragungselement 2 aufzustoßen.

Bei der in Fig. 2 dargestellten Ausführungsform übt der elektromechanische Aktuator 33 außerdem die Funktion eines Sensors zur Erfassung der Position des Kraftübertragungselementes 2 aus. Mit dieser Information ist festzustellen, ob die Fahrzeugbremse verriegelt oder gelöst ist. Dazu wird der Strombedarf des elektromechanischen Aktuators 33 ermittelt, was auf die Position der Antriebswelle 34 und damit auf die Position des Kraftübertragungselements 2 schließen lässt. Alternativ kann auch ein sogenannter Schrittzählsensor zum Einsatz kommen, der die Anzahl der Umdrehungen des elektromechanischen Aktuators 2 ermittelt. Mit Hilfe dieser Information ist wiederum die Position des Kraftübertragungselements 2 ermittelbar.

Bei einer weiteren, nicht dargestellten Ausführungsform wird auf den separaten Speicherdruckraum 9 verzichtet. Ein Bremskolben und ein Speicherkolben werden in dieser Ausführung von einem in einen gemeinsamen Druckraum eingesteuerten Druck betätigt. Während Betriebsbremsungen wird eine Speicherkolbenbewegung durch das anhand der Fig. 1 und 2 beschriebene Federelement 12 verhindert. Zur Durchführung eines Feststellbremsvorganges wird das Kraftübertragungselement durch einen elektromechanischen Aktuator entsprechend betätigt, sodass zwei Reibflächen, die am Speicherkolben und an der Gewindespindel einer mit dem Bremskolben zusammenwirkenden Gewindemutterspindel-Anordnung ausgebildet sind, miteinander in Eingriff treten können. Zum Lösen der Feststellbremse betätigt der elektromechanische Aktuator das Kraftübertragungselement, wonach die eben genannten Reibflächen außer Eingriff gebracht werden.

Besonders vorteilhaft ist bei den Ausführungen gemäß Fig. 1 und Fig. 2 der vorliegenden Erfindung, dass aufgrund eines Defekts des SG-Ventils 24 keine Verriegelung erfolgen kann, da für eine Verriegelung eine Relativbewegung zwischen dem Kraftübertragungselement 2 und dem Speicherkolben 11 vollzogen werden muss, die nur realisiert werden kann, wenn der elektromagnetische Aktuator 3 oder der elektromechanische Aktuator 33 das Kraftübertragungselement 2 arretieren bzw. betätigen.

Zum Druckaufbau sowohl im Betriebsdruckraum 7 als auch im Speicherdruckraum 22, 9 werden verschiedene, vorzugsweise fremdansteuerbare Druckerzeugungsaggregate verwendet. So kann z. B. eine hydraulische Pumpe eingesetzt werden, die als Fremddruckquelle eines elektrohydraulischen Bremssystems dient. Denkbar ist auch eine Betätigungseinheit mit einem fremdansteuerbaren Bremskraftverstärker sowie einem dem Bremskraftverstärker nachgeschalteten Hauptbremszylinder. Alternativ kann jedoch auch ein durch den Fahrzeugführer betätigbarer Druckerzeuger Verwendung finden.

## Patentansprüche

1. Hydraulische Fahrzeugbremse, insbesondere für Kraftfahrzeuge, mit einem Bremsgehäuse (1), in dem ein hydraulischer Betriebsdruckraum (7) von einem Bremskolben (6) begrenzt ist, wobei der Bremskolben (6) im zugespannten Zustand mittels einer Verriegelungsvorrichtung verriegelbar ist, deren Verriegelung durch eine Relativbewegung eines Kraftübertragungselements (2) ermöglicht wird, wobei ein mit dem Bremskolben (6) zusammenwirkender Arbeitsspeicher (10) vorgesehen ist, der durch einen absperrbaren Speicherdruckraum (9), einen den Speicherdruckraum (9) begrenzenden Speicherkolben (11) und mindestens ein sich am Speicherkolben (11) abstützendes Federelement (12) gebildet ist, **dadurch gekennzeichnet, dass** das Kraftübertragungselement (2) vom Speicherkolben (11) in einer der Zuspannrichtung des Bremskolbens (6) entgegengesetzten Richtung mitnehmbar ist und von einem elektromagnetischen oder einem elektromechanischen Aktuator (3, 33) arretierbar ist, sodass eine Relativbewegung zwischen dem Kraftübertragungselement (2) und dem Speicherkolben (11) ermöglicht wird.

2. Hydraulische Fahrzeugbremse nach Anspruch 1, **dadurch gekennzeichnet, dass** im Speicherkolben (11) eine Stufenbohrung (13) vorgesehen ist, die das Kraftübertragungselement (2) aufnimmt.

3. Hydraulische Fahrzeugbremse nach Anspruch 2, **dadurch gekennzeichnet, dass** das Kraftübertragungselement (2) einen axialen Kragen (4) aufweist, der sich am Übergang der unterschiedlichen Durchmesser der Stufenbohrung (13) abstützt.

4. Hydraulische Fahrzeugbremse nach einem der Ansprüche 1 bis 3, **dadurch gekennzeichnet, dass** die Verriegelungsvorrichtung durch eine Gewindemutter-Spindel-Anordnung (14) gebildet ist, deren Gewindemutter (15) sich am Bremskolben (6) abstützt oder mit dem Bremskolben (6) einstückig ausgebildet ist, während die Spindel (16) mit einer ersten Reibfläche (17) versehen ist, die im verriegelten Zustand mit einer am Speicherkolben (11) verdrehgesichert angeordneten zweiten Reibfläche (18) zusammenwirkt.

5. Hydraulische Fahrzeugbremse nach Anspruch 4, **dadurch gekennzeichnet, dass** das Kraftübertragungselement (2) ein Zentrallager (21) für die Spindel (16) bildet.

6. Hydraulische Fahrzeugbremse nach Anspruch 3, **dadurch gekennzeichnet, dass** ein weiteres Federelement (22) vorgesehen ist, das den Kragen (4) des Kraftübertragungselements (2) zur Anlage am Übergang der unterschiedlichen Durchmesser der Stufenbohrung (13) bringt.

7. Hydraulische Fahrzeugbremse nach einem der vorhergehenden Ansprüche, **dadurch gekennzeichnet, dass** der elektromagnetische Aktuator (3) mit einer Ankerplatte (23) zusammenwirkt, die mit dem Kraftübertragungselement (2) in kraftübertragender Verbindung steht.

8. Hydraulische Fahrzeugbremse nach Anspruch 7, **dadurch gekennzeichnet, dass** die Spule (25) des elektromagnetischen Aktuators (3) die Funktion eines Sensors zur Erfassung der Position der Ankerplatte (23) ausübt.

9. Hydraulische Fahrzeugbremse nach einem Ansprüche 1 bis 5, **dadurch gekennzeichnet, dass** der elektromechanische Aktuator (33) die Funktion eines Sensors zur Erfassung der Position des Kraftübertragungselements (2) ausübt.

10. Hydraulische Fahrzeugbremse nach Anspruch 9, **dadurch gekennzeichnet, dass** das Kraftübertragungselement (2) über ein vorzugsweise selbsthemmendes Gewinde (35) mit dem Speicherkolben (11) verbunden ist.

11. Hydraulische Fahrzeugbremse nach Anspruch 9 oder 10, **dadurch gekennzeichnet, dass** der elektromechanische Aktuator (33) über ein vorzugsweise selbsthemmendes Gewinde (35) und eine adaptive Verbindung (32) eine von seiner Position unabhängige Relativbewegung zwischen dem Speicherkolben (11) und dem Kraftübertragungselement (2) ausübt.

12. Hydraulische Fahrzeugbremse nach einem der vorhergehenden Ansprüche, **dadurch gekennzeichnet, dass** der hydraulische Speicherdruckraum (9) mittels eines elektrisch schaltbaren Ventils (24) absperrbar ist.

13. Hydraulische Fahrzeugbremse nach einem der vorhergehenden Ansprüche, **dadurch gekennzeichnet, dass** der Druckaufbau sowohl im Betriebsdruckraum (7) als Speicherdruckraum (9) mittels einer hydraulischen Pumpe erfolgt, die vorzugsweise als Fremddruckquelle eines elektrohydraulischen Bremssystems dient.

14. Hydraulische Fahrzeugbremse nach einem der Ansprüche 1 bis 12, **dadurch gekennzeichnet, dass** der Druckaufbau sowohl im Betriebsdruckraum (7) als auch im Speicherdruckraum (9) mittels eines durch den Fahrzeugführer betätigbaren Druckerzeugers erfolgt.

## Claims

1. A hydraulic vehicle brake, in particular for motor vehicles, including a brake housing (1) in which a hydraulic working pressure chamber (7) is delimited by a brake piston (6), wherein the brake piston (6), in the applied condition, can be locked by means of a locking device, locking thereof being allowed by a relative movement of a force-transmitting element (2), wherein an energy accumulator (10) cooperating with the brake piston (6) is provided, which is comprised of a closable accumulator pressure chamber (9), an accumulator piston (11) delimiting the accumulator pressure chamber (9), and at least one spring element (12) being supported on the accumulator piston (11),
**characterized in that** the force-transmitting element (2) can be entrained by the accumulator piston (11) in a direction opposite to the direction of application of the brake piston (6) and can be arrested by an electromagnetic or an electromechanical actuator (3, 33) so that a relative movement between the force-transmitting element (2) and the accumulator piston (11) is rendered possible.

2. Hydraulic vehicle brake as claimed in claim 1,
**characterized in that** a stepped bore (13) accommodating the force-transmitting element (2) is provided in the accumulator piston (11).

3. Hydraulic vehicle brake as claimed in claim 2,
**characterized in that** the force-transmitting element (2) has an axial collar (4) which is supported at the transition of the different diameters of the stepped bore (13).

4. Hydraulic vehicle brake as claimed in any one of claims 1 to 3,
**characterized in that** the locking device is a threaded-nut/spindle assembly (14), the threaded nut (15) thereof being supported on the brake piston (6) or being integrally designed with the brake piston (6), while the spindle (16) includes a first friction surface (17) cooperating, in the locked condition, with a second friction surface (18) that is arranged in a non-rotatable manner at the accumulator piston (11).

5. Hydraulic vehicle brake as claimed in claim 4,
**characterized in that** the force-transmitting element (2) forms a central bearing (21) for the spindle (16).

6. Hydraulic vehicle brake as claimed in claim 3,
**characterized in that** there is provision of another spring element (22) that moves the collar (4) of the force-transmitting element (2) into abutment at the transition of the different diameters of the stepped bore (13).

7. Hydraulic vehicle brake as claimed in any one of the preceding claims,
**characterized in that** the electromagnetic actuator (3) cooperates with an armature plate (23) being in a force-transmitting connection with the force-transmitting element (2).

8. Hydraulic vehicle brake as claimed in claim 7,
**characterized in that** the coil (25) of the electromagnetic actuator (3) performs the function of a sensor for detecting the position of the armature plate (23).

9. Hydraulic vehicle brake as claimed in any one of claims 1 to 5,
**characterized in that** the electromechanical actuator (33) performs the function of a sensor for detecting the position of the force-transmitting element (2).

10. Hydraulic vehicle brake as claimed in claim 9,
**characterized in that** the force-transmitting element (2) is connected to the accumulator piston (11) by way of a preferably self-locking thread (35).

11. Hydraulic vehicle brake as claimed in claim 9 or 10,
**characterized in that** the electromechanical actuator (33) exercises a relative movement, which is independent of its position, between the accumulator piston (11) and the force-transmitting element (2) by way of a preferably self-locking thread (35) and an adaptive connection (32).

12. Hydraulic vehicle brake as claimed in any one of the preceding claims,
**characterized in that** the hydraulic accumulator pressure chamber (9) can be closed by means of an electrically operable valve (24).

13. Hydraulic vehicle brake as claimed in any one of the preceding claims,
**characterized in that** the pressure buildup is executed both in the working pressure chamber (7) and in the accumulator pressure chamber (9) by means of a hydraulic pump, which is preferably used as an independent pressure source of an electrohydraulic brake system.

14. Hydraulic vehicle brake as claimed in any one of claims 1 to 12,
**characterized in that** pressure is built up both in the working pressure chamber (7) and in the accumulator pressure chamber (9) by means of a pressure generator that can be actuated by the driver.

## Revendications

1. Frein hydraulique de véhicule, en particulier pour véhicules automobiles, comportant un boîtier de frein (1) dans lequel un compartiment sous pression hydraulique de service (7) est délimité par un piston de frein (6), dans lequel le piston de frein (6) à l'état tendu peut être verrouillé au moyen d'un dispositif de verrouillage dont le verrouillage est rendu possible par un mouvement relatif d'un élément de transmission de force (2), dans lequel il est prévu un accumulateur de travail (10) coopérant avec le piston de frein (6), lequel est formé par un compartiment sous pression d'accumulateur (9) pouvant être fermé, un piston d'accumulateur (11) délimitant le compartiment sous pression d'accumulateur (9) et par au moins un élément de ressort (12) prenant appui contre le piston d'accumulateur (11), **caractérisé en ce que** l'élément de transmission de force (2) peut être entraîné par le piston d'accumulateur (11) dans un sens opposé au sens de serrage du piston de frein (6) et peut être bloqué par un actionneur (3, 33) électromagnétique ou électromécanique, de manière à rendre possible un mouvement relatif entre l'élément de transmission de force (2) et le piston d'accumulateur (11).

2. Frein hydraulique de véhicule selon la revendication 1, **caractérisé en ce qu'**il est prévu dans le piston d'accumulateur (11) un alésage étagé (13) qui reçoit l'élément de transmission de force (2).

3. Frein hydraulique de véhicule selon la revendication 2, **caractérisé en ce que** l'élément de transmission de force (2) comporte une collerette axiale (4) qui prend appui contre la transition des différents diamètres de l'alésage étagé (13).

4. Frein hydraulique de véhicule selon l'une des revendications 1 à 3, **caractérisé en ce que** le dispositif de verrouillage est formé par un agencement broche-écrou fileté (14) dont l'écrou fileté (15) prend appui contre le piston de frein (6) ou est réalisé d'un seul tenant avec le piston de frein (6), tandis que la broche (16) est pourvue d'une première surface de friction (17) qui, à l'état verrouillé, coopère avec une seconde surface de friction (18) disposée de manière bloquée en rotation sur le piston d'accumulateur (11).

5. Frein hydraulique de véhicule selon la revendication 4, **caractérisé en ce que** l'élément de transmission de force (2) forme un palier central (21) pour la broche (16).

6. Frein hydraulique de véhicule selon la revendication 3, **caractérisé en ce qu'**il est prévu un autre élément de ressort (22) qui amène la collerette (4) de l'élément de transmission de force (2) en contact avec la transition des différents diamètres de l'alésage étagé (13).

7. Frein hydraulique de véhicule selon l'une des revendications précédentes, **caractérisé en ce que** l'actionneur électromagnétique (3) coopère avec une palette (23) qui est en liaison de transmission des forces avec l'élément de transmission de force (2).

8. Frein hydraulique de véhicule selon la revendication 7, **caractérisé en ce que** la bobine (25) de l'actionneur électromagnétique (3) assure la fonction d'un capteur pour détecter la position de la palette (23).

9. Frein hydraulique de véhicule selon l'une des revendications 1 à 5, **caractérisé en ce que** l'actionneur électromécanique (33) assure la fonction d'un capteur pour détecter la position de l'élément de transmission de force (2).

10. Frein hydraulique de véhicule selon la revendication 9, **caractérisé en ce que** l'élément de transmission de force (2) est relié au piston d'accumulateur (11) par un filetage (35) de préférence autobloquant.

11. Frein hydraulique de véhicule selon la revendication 9 ou 10, **caractérisé en ce que** l'actionneur électromécanique (33) exécute un mouvement relatif, indépendant de sa position, entre le piston d'accumulateur (11) et l'élément de transmission de force (2), par l'intermédiaire d'un filetage (35) de préférence autobloquant et une liaison (32) d'adaptation.

12. Frein hydraulique de véhicule selon l'une des revendications précédentes, **caractérisé en ce que** le compartiment sous pression d'accumulateur hydraulique (9) peut être fermé au moyen d'une soupape (24) à commande électrique.

13. Frein hydraulique de véhicule selon l'une des revendications précédentes, **caractérisé en ce que** la montée en pression dans le compartiment sous pression de service (7) comme dans le compartiment sous pression d'accumulateur (9) s'effectue au moyen d'une pompe hydraulique qui sert de préférence de source de pression externe d'un système de freinage électrohydraulique.

14. Frein hydraulique de véhicule selon l'une des revendications 1 à 12, **caractérisé en ce que** la montée en pression dans le compartiment sous pression de service (7) comme dans le compartiment sous pression d'accumulateur (9) s'effectue au moyen d'un générateur de pression qui peut être actionné par le conducteur du véhicule.
